# EUROPEAN PATENT SPECIFICATION

(11) **EP 1 753 330 B1**
(45) Date of publication and mention of the grant of the patent: **21.05.2008**
(21) Application number: 05734956.5
(22) Date of filing: 19.04.2005
(51) Int. Cl.: A47J 36/06

(54) **IMPROVED LID FOR CONTAINERS FOR COOKING FOODS**
VERBESSERTER DECKEL FÜR BEHÄLTER ZUM GAREN VON NAHRUNGSMITTELN
COUVERCLE AMELIORE POUR RECIPIENTS DE CUISSON D'ALIMENTS

(30) Priority: 30.04.2004 IT RM20040209
(43) Date of publication of application: 21.02.2007
(73) Proprietor: Opinion Leaders S.R.L., 04100 Latina (IT)
(72) Inventor: CIOETA, Daniela, 04100 Latina (IT); VECCHINI, Lorena, 04100 Latina (IT)
(74) Representative: Banchetti, Marina
(86) International application number: PCT/IT2005/000225
(87) International publication number: WO 2005/104917

(56) References cited:
- CH-A- 86 005
- DE-U1- 8 715 308
- GB-A- 2 139 077
- US-A- 3 428 236
- US-A- 4 482 077
- US-A1- 2002 040 711
- PATENT ABSTRACTS OF JAPAN vol. 009, no. 196 (C-297), 13 August 1985 (1985-08-13) & JP 60 066949 A (MATSUSHITA DENKI SANGYO KK), 17 April 1985 (1985-04-17)

## Description

The present invention concerns an improved lid for cooking foods.

More specifically, the invention concerns a lid of the above kind, studied and realised particularly to be able to recover the nutritional properties of foods containing saturated vapour deriving from the cooking.

As it is well known, at present foods cooked at home provide a cooking of the foods using gas, said cooking not always being uniform. Particularly, if foods would be cooked at an excessive temperature, most organoleptic properties would degrade and lost.

In order to solve this problem, lids exist since many years providing holes for venting saturated vapour. This operation principle privilege cooking of foods at low temperature, with a uniform distribution of the heat inside the pot, by natural convective motion. The above allows recovering the vapour phase transformed into liquid phase, thus avoiding that the food passes 100°C, and preventing the degradation of vitaminic, proteinic and lipidic components, thus reducing the energetic need (wood, town gas, methane, electricity).

However, in this kind of systems, vapour from cooking employing said lids exits under a certain pressure from the cooking container, thus dispersing in the environment nutritive properties of foods. In other words, said lids determine a high perishing of properties of foods.

In view of the above, it is well evident the needing of having a lid allowing obtaining a cooking of the foods without loosing quality of the same foods and allowing a cooking at not too high temperatures, thus creating also a thermal insulation with respect to the surrounding environment.

In this situation it is included the solution suggested according to the present invention.

Thus, the object of the present invention is that of suggesting a lid allowing at the same time containing the heat dispersion, promoting the ordered and accelerated outlet of vapours from a cooking container through outlet paths having a suitable shape and housing, and conveying and controlling production of these vapours in such a way they fall down condensed inside the cooking pot.

Another object of the invention is that of obtaining a safe of energy, along with a recovery of the food organoleptic properties.

It is therefore specific object of the present invention an improved lid for covering containers for cooking foods, comprising means for cooling vapour placed outside and above said lid, and support means for said vapour cooling means, characterised in that is has an extension in the thickness direction so as to be able realising a plurality of channels through the lid, said channels realising a passage path for the vapour coming from the container for cooking said foods outward, causing an acceleration of the vapour, said accelerated vapour contacting through said channels a lower surface of said vapour cooling means, condensing and flowing again, at a liquid phase, inside said cooking container through said plurality of channels, said vapour cooling means comprisng a concave plate providing an undulated or lamellar lower surface.

Always according to the invention, said lid can be comprised of two layers, coupled in correspondence of the edges, said layers realising an interspace suitable to thermally insulating the inner part of the cooking container.

Furthermore, according to the invention, said two layers can be coupled by said channels.

Still according to the invention, said lid can be solid.

Always according to the invention, said channels can have a cylindrical profile or it can be preferably profiled.

Furthermore, according to the invention, said lid can be convex.

Furthermore, according to the invention, said plate provides an undulated and/or lamellar lower surface and some holes, preferably provided on the edge, to promote condensation of vapour.

Always according to the invention, said support means of said cooling means can be adjustable.

Preferably, according to the invention, said lid can comprise a knob, on the top of said support means for said cooling means.

Furthermore, according to the invention, said cooling means can be housed in the lower part of said knob.

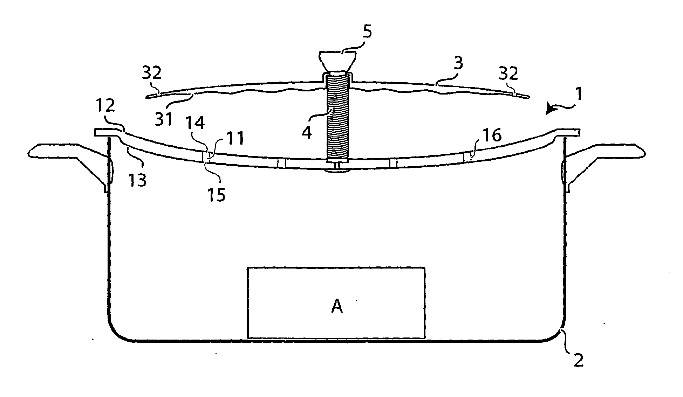

The present invention will be now described, for illustrative but not limitative purposes, according to its preferred embodiment, with particular reference to the figure of the enclosed drawing, showing a section view of a pot or other cooking container, on which it is placed the improved lid for cooking foods according to the present invention.

In order to better understand the present invention, the operation modes of the preferred embodiment of the lid will be described in the following, similar modes being valid for other embodiments.

Making reference to the figure, it can be seen the application of the lid, generically indicated by reference number 1, on a pot or cooking container 2, within which the food A to be cooked is contained.

Channels 11 are present on the upper surface 12 of the lid 1, communicating the inside of the pot or cooking container 2 with the surrounding environment.

Observing now in greater detail the figure, it is possible observing that lid 1 in this embodiment provides respectively an upper surface 12 and a lower surface 13, comprised of two metallic layers, suitably spaced and coupled along the edges, curved in such a way to present the convex surface inside the pot or cooking container 2. Holes 14, 15 are present on both the layers 12, 13, creating channels 11. Said holes 14, 15 have a suitable diameter, and their positioning on the surfaces 12 or 13 describes in the present embodiment a circumference with the centre coinciding with the centre of the lid 1.

A lid-cover 3 is provided above the lid. Saturated vapours produced by the food A during the cooking pass through said channels 11, being subjected to an acceleration outward the pot or cooking container 2. Said saturated vapours exiting from the channels 11 meet the lid-cover 3, contacting which are subjected to a condensation, in view of the fact that said lid-cover 3 has a lower temperature.

Consequently, recover of nutritional substances is obtained, said substances passing through the same channels 11, going back inside the pot or cooking container 2.

Lid 1, in the embodiment shown, looks like a chamber, within which vacuum is created, in order to thermally insulating in the best way the cooking zone with respect to the outside environment. This allows having an easy handling of the lid 1, being it hollow and light.

Outer surface of the channels 11 is comprised of cylindrical elements 16. Said cylindrical elements 16 can also have a shape different from the cylindrical shape, such as a profile that, starting from the outer layer 12 toward the inner layer 13, is initially converging and then diverging.

These channels 11 have the function of orderly capturing and accelerating the outlet speed of cooking vapours by Venturi effect. This effect can be obtained both for cylindrical channels 11 and with channels having the above converging - diverging profile.

In case of cylindrically shaped channels 11, a neck is obtained between the inner volume of the pot or cooking container 2, within which the saturated vapour is contained at high pressure, and the outside environment at atmospheric pressure.

If the channels 11 are realised with a converging - diverging profile, a further improvement of the above effect is obtained.

Saturated vapours exiting under pressure from said pot or cooking container 2 meet the lower surface 31 of the lid-cover 3, having a suitable concave shape. Said lid-cover 3 has the function of condensing the cooking vapours arriving from the underlying channels. Condensate created by said saturated vapours accumulates on the lower surface 31 and then slides on the upper surface 12 of said lid 1. Convexity of said upper surface 12 of the lid 1 provided in the preferred embodiment, promotes the collection of the condensate and outflow of liquid substances inside the pot or cooking container 2 by said channels 11.

Lower surface 31 of the lid-cover 3 has an undulated profile so as to increase the surface met by the saturated vapour, thus increasing the condensation effect of the lid-cover 3.

Furthermore, lid-cover 3 provides, in the embodiment shown, also holes 32, preferably realised in correspondence of the edge, to separate the condensate droplets and making easier the return of the bigger production of liquid phase thus promoting the maintenance of the nutritional aspects of the food.

In order to regulating the condensate quality and to adapt the same to specific cooking needing, a screw 4 has been introduced as coupling between the lid 1 and the lid-cover 3, in order to be able to vary the distance between the two elements. This solution can be used for foods requiring a different cooking time, with a higher or lower recover of cooking liquids, or to adjust the condensate quality in function of the higher or lower production of vapour.

A knob 5 is present above the screw 4, said knob being comprised of not-conductive material, to move the lid 1 also during the cooking of the foods.

On the basis of the above specification, it can be observed that the basic feature of the present invention is the realisation of a lid for a food cooking container, said lid having a thickness through which profiled or not, channels are realised, for acceleration by Venturi effect of saturated vapour arriving under pressure from the pot or cooking container, said vapour being then condensed by cooling means and introduced again within said pot or cooking container by the same channels, in order to recover the nutritional substances.

An advantage of the present invention is the thermal insulation effect of the lid obtained by its two-layer structure.

Another advantage of the present invention is that of being able to adjust the height by cooling means to regulate the cooking of the food.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved lid (1) for covering containers for cooking foods (2), comprising means (3) for cooling vapour placed outside and above said lid (1), and support means (4) for said vapour cooling means (3), the lid (1) having an extension in the thickness direction so as to be able to realize a plurality of channels (11) through the lid (1), said channels (11) realising a passage path for the vapour coming from the container (2) for cooking said foods outward, causing an acceleration of the vapour, said accelerated vapour contacting through said channels (11) a lower surface (31) of said vapour cooling means (3), condensing and flowing again, at a liquid phase, inside said cooking container (2) through said plurality of channels (11), **characterised in that** said vapour cooling means comprises a concave plate providing an undulated or lamellar lower surface.

2. Lid according to claim 1, **characterised in that** said lid (1) is comprised of two layers, coupled in correspondence of the edges, said layers realising an interspace suitable to thermally insulating the inner part of the cooking container (2).

3. Lid according to claim 2, **characterised in that** said two layers are coupled by said channels (11).

4. Lid according to one of the preceding claims, **characterised in that** said lid (1) is solid.

5. Lid according to one of the preceding claims, **characterised in that** said channels (11) have a cylindrical profile.

6. Lid according to one of the preceding claims 1 - 4, **characterised in that** said channels (11) are profiled.

7. Lid according to one of the preceding claims, **characterised in that** said lid (1) is convex.

8. Lid according to one of the preceding claims, **characterised in that** said plate comprises some holes (32), preferably provided on the edge, to promote condensation of vapour.

9. Lid according to one of the preceding claims, **characterised in that** said support means of said cooling means (3) are adjustable.

10. Lid according to one of the preceding claims, **characterised in that** said support means of said cooling means (3) comprise a screw (4).

11. Lid according to one of the preceding claims, **characterised in that** said lid (1) comprises a knob (5), on the top of said support means for said cooling means (3).

12. Lid according to claim 11, **characterised in that** said cooling means (3) is housed in the lower part of said knob (5).

## Patentansprüche

1. Verbesserter Deckel (1) zum Abdecken von Behälter zum Kochen von Nahrungsmitteln (2), umfassend Mittel (3) zum Kühlen von Dampf, der außerhalb und oberhalb des Deckels (1) angeordnet ist, und Trägermittel (4) für das Dampf-Kühlmittel (3), wobei der Deckel (1) in der Dickenrichtung eine Erweiterung aufweiset, um so geeignet zu sein, eine Vielzahl von Kanälen (11) durch den Deckel (1) zu realisieren, wobei die Kanäle (11) einen Durchtrittsweg für den Dampf realisieren, der von dem Behälter (2) zum Kochen von Nahrungsmitteln nach außen kommt, und eine Beschleunigung des Dampfes bewirken, wobei der beschleunigte Dampf, der durch die Kanäle (11) eine untere Oberfläche (31) des Dampf-Kühlmittels (3) berührt, kondensiert und in einer flüssigen Phase wieder innerhalb des Kochbehälters (2) durch die Vielzahl von Kanälen (11) fließt, **dadurch gekennzeichnet, dass** das Dampf-Kühlmittel eine konkave Platte umfasst, die eine wellenförmige oder lamellierte untere Oberfläche bereitstellt.

2. Deckel gemäß Anspruch 1, **dadurch gekennzeichnet, dass** der Deckel (1) zwei Schichten umfasst, die in Entsprechung der Kanten verbunden sind, wobei die Schichten einen Zwischenraum realisieren, der geeignet ist, den inneren Teil des Kochbehälters (2) thermisch zu isolieren.

3. Deckel gemäß Anspruch 2, **dadurch gekennzeichnet, dass** die zwei Schichten durch die Kanäle (11) gekoppelt sind.

4. Deckel gemäß einem der vorhergehenden Ansprüche, **dadurch gekennzeichnet, dass** der Deckel (1) fest ist.

5. Deckel gemäß einem der vorhergehenden Ansprüche, **dadurch gekennzeichnet, dass** die Kanäle (11) ein zylindrisches Profil aufweisen.

6. Deckel gemäß einem der vorhergehenden Ansprüche 1 bis 4, **dadurch gekennzeichnet, dass** die Kanäle (11) profiliert sind.

7. Deckel gemäß einem der vorhergehenden Ansprüche, **dadurch gekennzeichnet, dass** der Deckel (1) konvex ist.

8. Deckel gemäß einem der vorhergehenden Ansprüche, **dadurch gekennzeichnet, dass** die Platte einige Löcher (32), die vorzugsweise an der Kante vorgesehen sind, umfasst, um die Kondensation von Dampf zu fördern.

9. Deckel gemäß einem der vorhergehenden Ansprüche, **dadurch gekennzeichnet, dass** die Trägermittel des Kühlmittels (3) justierbar sind.

10. Deckel gemäß einem der vorhergehenden Ansprüche, **dadurch gekennzeichnet, dass** die Trägermittel des Kühlmittels (3) eine Schraube (4) umfassen.

11. Deckel gemäß einem der vorhergehenden Ansprüche, **dadurch gekennzeichnet, dass** der Deckel (1) einen Griff (5) auf der Oberseite der Trägermittel für das Kühlmittel (3) umfasst.

12. Deckel gemäß Anspruch 11, **dadurch gekennzeichnet, dass** das Kühlmittel (3) in den unteren Teil des Griffes (5) angeordnet ist.

## Revendications

1. Couvercle amélioré (1) pour recouvrir des récipients (2) pour la cuisson d'aliments, comprenant des moyens (3) pour refroidir de la vapeur situés à l'extérieur et au-dessus dudit couvercle (1), et des moyens de support (4) pour lesdits moyens de refroidissement de la vapeur (3), le couvercle (1) ayant une extension dans la direction de l'épaisseur de façon à permettre la réalisation d'une pluralité de canaux (11) à travers le couvercle (1), lesdits canaux (11) réalisant un passage pour la sortie de la vapeur provenant du récipient (2) pour la cuisson desdits aliments, et provoquant une accélération de la vapeur, ladite vapeur accélérée entrant en contact, à travers lesdits canaux (11), avec une surface inférieure (31) desdits moyens de refroidissement de vapeur (3), se condensant et s'écoulant de nouveau, en phase liquide, à l'intérieur du récipient de cuisson (2), à travers ladite pluralité de canaux (11), **caractérisé en ce que** lesdits moyens de refroidissement de vapeur comprennent une plaque concave présentant une surface inférieure ondulée ou lamellaire.

2. Couvercle selon la revendication 1, **caractérisé en ce que** ledit couvercle (1) est constitué de deux couches, couplées en correspondance au niveau de leurs bords, lesdites couches réalisant un écartement approprié pour une isolation thermique de la partie interne du récipient de cuisson (2).

3. Couvercle selon la revendication 2, **caractérisé en ce que** lesdites deux couches sont couplées par lesdits canaux (11).

4. Couvercle selon l'une quelconque des revendications précédentes, **caractérisé en ce que** ledit couvercle (1) est plein.

5. Couvercle selon l'une quelconque des revendications précédentes, **caractérisé en ce que** lesdits canaux (11) ont un profil cylindrique.

6. Couvercle selon l'une quelconque des revendications 1 à 4, **caractérisé en ce que** lesdits canaux (11) sont profilés.

7. Couvercle selon l'une quelconque des revendications précédentes, **caractérisé en ce que** ledit couvercle (1) est convexe.

8. Couvercle selon l'une quelconque des revendications précédentes, **caractérisé en ce que** ladite plaque comprend des trous (32), de préférence formés sur le bord, pour favoriser la condensation de la vapeur.

9. Couvercle selon l'une quelconque des revendications précédentes, **caractérisé en ce que** lesdits moyens de support desdits moyens de refroidissement (3) sont réglables.

10. Couvercle selon l'une quelconque des revendications précédentes, **caractérisé en ce que** lesdits moyens de support desdits moyens de refroidissement (3) comprennent une vis (4).

11. Couvercle selon l'une quelconque des revendications précédentes, **caractérisé en ce que** ledit couvercle (1) comprend un bouton (5), sur le dessus desdits moyens de support pour lesdits moyens de refroidissement (3).

12. Couvercle selon la revendication 11, **caractérisé en ce que** lesdits moyens de refroidissement (3) sont logés dans la partie inférieure dudit bouton (5).
